# EUROPÄISCHE PATENTANMELDUNG

(11) **EP 0 583 541 A1**
(43) Veröffentlichungstag der Anmeldung: **23.02.1994**
(21) Anmeldenummer: 93104246.9
(22) Anmeldetag: 16.03.1993
(51) Int. Cl.: G02B 6/44, G01C 19/72

(54) **Aufnahmegehäuse für optische Faser**

(30) Priorität: 05.08.1992 DE 4225906
(71) Anmelder: LITEF GmbH, D-79115 Freiburg (DE)
(72) Erfinder: Kemmler, Manfred, W-7801 Vörstetten (DE); Schweier, Wolfgang, W-7800 Freiburg (DE)
(74) Vertreter: TER MEER - MÜLLER - STEINMEISTER & PARTNER

(57) **Zusammenfassung**

Das Aufnahmegehäuse (2) für in einer faseroptischen Meßeinrichtung (20) zu verwendenden optischen Faser (22) umfaßt eine Grudplatte (12), umlaufende Seitenwände (6) zur Umgrenzung eines flachen Aufnahmeraums (13), der vorzugsweise durch eine Trennplatte (8) in einen oberen und einen unteren Teilaufnahmeraum unterteilt ist. In einer der Seitenwände (6) des Aufnahmegehäuses (2) ist wenigstens eine Durchbrechung (7) vorgesehen, über die die optische Faser in den Aufnahmeraum hineingeschoben bzw. herausgezogen wird. Weiterhin ist eine abnehmbare Verschlußplatte (9) vorhanden.

Durch das Aufnahmegehäuse für optische Fasern läßt sich vermeiden, daß überlange Faser-Verbindungsstücke in faseroptischen Meßeinrichtungen in Schleifen verlegt und am Chassis- oder Gehäuseteil durch Kleben fixiert werden müssen, was immer zu unvermeidlichen Verdrillungen führt und Umdisposition oder Änderungen im Aufbau erschwert.

## Beschreibung

Die Erfindung betrifft eine Vorrichtung zur Aufnahme bestimmter Abschnitte an optischer Faser, die einzelne Bauelemente oder Baugruppen in einer faseroptischen Meßeinrichtung miteinander verbindet.

Bei faseroptischen Meßeinrichtungen, wofür ein faseroptisches Interferometer und insbesondere eine mehrachsige faseroptische Drehraten-Sensoreinheit Beispiele sein mögen, besteht das Problem, daß bestimmte optische Faserstrekken, insbesondere Faser-Verbindungsstücke zwischen optischen Komponenten, beim Zusammenbau der Meßeinrichtung nicht einfach durchgetrennt, gekürzt und wieder verbunden werden können, weil dies technisch unmöglich oder nur mit erheblichem technischem Aufwand möglich wäre. Bisher werden solche überzähligen Faser-Verbindungsstücke In Schleifen verlegt und mit Klebern an Chassis- oder Gehäuseteilen fixiert. Dabei entstehen durch die Schleifen jedoch fast unvermeidlich Verdrillungen und durch das Verkleben wird die Demontage erschwert. Auch müssen besondere Vorsichtsmaßnahmen beim Zusammenbauen und Verpacken der Meßeinrichtung beachtet werden, was zusätzliche Kosten verursacht.

Der Erfindung liegt damit die Aufgabe zugrunde, die geschilderten Schwierigkeiten mit der Handhabung von faseroptischen Verbindungsstücken zwischen einzelnen Komponenten einer faseroptischen Meßeinrichtung zu vermeiden.

Die erfindungsgemäße Lösung besteht in einem Aufnahmegehäuse für optische Faser in einer faseroptischen Meßeinrichtung mit einer Grundplatte, daran angesetzten umlaufenden Seitenwänden zur Umgrenzung eines flachen Aufnahmeraums, mit wenigstens einer Durchbrechung in einer der Seitenwände, über welche die optische Faser in den Aufnahmeraum hineingeschoben bzw. herausgezogen werden kann, sowie mit einer oberen Verschlußplatte.

Vorzugsweise weist das flache Aufnahmegehäuse in der einen Seitenwand zwei auf geringen Abstand voneinander angeordnete Durchbrechungen auf zur Durchführung jeweils eines Endes der in dem Aufnahmeraum enthaltenen Fasermenge. Die Faser wird vorzugsweise bei geschlossenem Aufnahmegehäuse über die Durchbrechungen in den inneren Aufnahmeraum eingefädelt.

Sofern die in dem Aufnahmegehäuse unterzubringende Faser einen besonders zu schützenden Bereich beinhaltet, z. B. einen Spleiß oder einen Koppler, so wird dieser bei geöffnetem Aufnahmegehäuse in eine definierte Position gebracht. Anschließend wird bei geschlossenem Aufnahmegehäuse der Rest der Faser über die beiden Durchbrechungen eingefädelt. Für diesen Fall der Anwendung der Erfindung ist es zweckmäßig, in einigen Fällen sogar notwendig, den flachen Aufnahmeraum durch eine dünne, parallel zur oberen bzw. unteren Deckfläche des Gehäuses eingesetzte Trennplatte in einen unteren und einen oberen Teilraum zu unterteilen. Der zu schützende Bereich der Faser, also z. B. der Spleiß oder der Koppler, wird, wie erwähnt, zunächst in der definierten Position innerhalb des Aufnahmeraums fixiert, und zwar so, daß er im Bereich einer Aussparung der Trennplatte zu stehen kommt. Bei dieser Anwendung wird der Sinn der zwei vorgesehenen Durchbrechungen und der Trennplatte deutlich: der auf der einen Seite, z. B. ''links'' von dem zu schützenden Bereich befindliche Faserabschnitt wird zuerst z. B. unterhalb der Trennplatte über die eine Durchbrechung eingefädelt. Anschließend wird der andere, z. B. ''rechts'' befindliche Faserabschnitt oberhalb der Platte durch die andere Durchbrechung eingefädelt.

Beinhaltet die zu verstauende Faser keinen empfindlichen Bereich, so kann ein Einfädeln auch ohne Trennplatte durchgeführt werden, wobei der Beginn der Einfädelung an einem Ende der Faser liegt. In einem solchen Fall könnte die seitliche Durchbrechung schlitzförmig gestaltet sein, um die erste Einfädelung bei geschlossenem Aufnahmegehäuse durchführen zu können.

Zweckmäßig ist es, um den Einfädelvorgang kontrollieren zu können, sowohl den Gehäusedeckel als auch die Trennplatte aus einem durchsichtigen Material zu fertigen. Die Trennplatte kann dabei mit vergleichsweise großer Toleranz gefertigt sein; sie braucht nicht paßgenau auf die Abmessungen des flachen Aufnahmeraums angepaßt zu sein.

Ein wichtiger Gesichtspunkt für die Dimensionierung des Aufnahmegehäuses ist ein sogenannter ''Formfaktor'', der für ein geordnetes Verlegen der in den Aufnahmeraum eingefädelten Faser entscheidend ist. Wichtig ist hierbei die vergleichsweise sehr geringe Höhe des Aufnahmeraums. Weiterhin muß der Aufnahmeraum deutlich länger als breit sein, wobei das Verhältnis von Länge zu Breite insbesondere zu ca. 2:1 gewählt wird. Dadurch legt sich die Faser beim Einfädeln oder Einschieben in gleichförmiger Acht-Konfiguration (''8''-Anordnung) an die Außenwände des Aufnahmeraums. Da die Breite des Aufnahmeraums den Biegeradius der Faser bestimmt, sollte sie breiter gewählt werden als der zulässige Biegedurchmesser der gebogenen Faser. Die Höhe des Aufnahmeraums ist in der Regel so bemessen, daß die auftretenden Kreuzungspunkte der Achten Platz finden.

Mit der Erfindung wird das geschilderte Problem mit dem Verlegen von Verbindungsstücken an optischer Faser zwischen optischen Komponenten für die meisten Anwendungsfälle auf einfache Weise dadurch gelöst, daß ein optisches Verbindungsstück bei geschlossener Verschlußplatte in das Aufnahmegehäuse oder die Aufnahmebox in einer entsprechenden Anzahl von Schleifen eingefädelt und die Verbindungsenden über die Durchbrechung(en) herausgeführt werden.

Sofern mehrere Faser-Verbindungsstücke zu verstarnen sind, lassen sich mehrere der flachen Aufnahmegehäuse stapelartig übereinander anordnen.

Weitere Vorteile und Einzelheiten der Erfindung werden nachfolgend anhand eines Beispiels mit Bezug auf die Zeichnungen näher erläutert. Es zeigen:
- Fig. 1: in stark schematisierter Blockbilddarstellung den Aufbau einer faseroptischen Meßeinrichtung, im dargestellten Beispiel eine dreiachsige Drehratensensoranordnung;
- Fig. 2: ein erfindungsgemäßes Aufnahmegehäuse für Verbindungsstücke optischer Faser; und
- Fig. 3: den konstruktiven Aufbau einer dreiachsigen faseroptischen Drehratensensoranordnung als ein Anwendungsbeispiel für den Gegenstand der Erfindung.

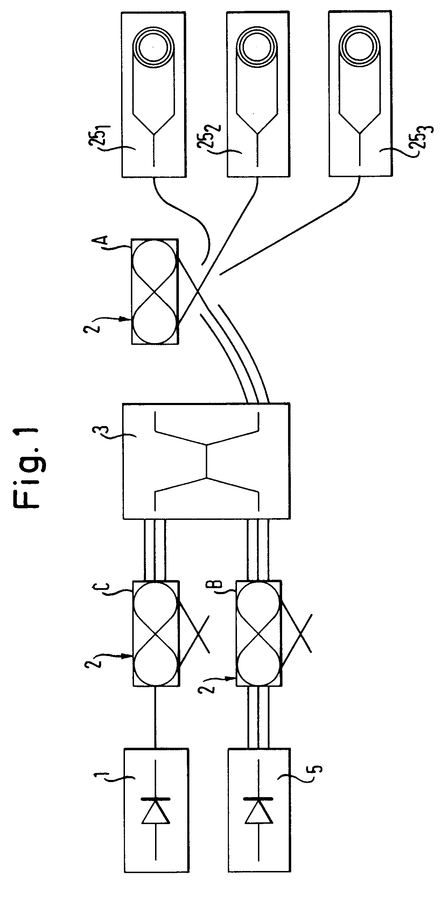

Als wesentliche Baugruppen (ohne Vollständigkeit) einer faseroptischen Drehratensensoranordnung erkennt man in Fig. 1 eine Lichtquelle 1, beispielsweise eine Superlumineszenzdiode, einen optischen 2x2-Koppler 3 und die drei Sensoreinheiten 25₁ bis 25₃ mit integrierter optischer Strahlteiler- und Phasenmodulatoreinheit und den Sensorspulen sowie die Photodetektoreinheit 5. Zwischen der Lichtquelle 1 und dem Koppler 3, zwischen dem Koppler 3 und den Sensoreinheiten 25₁ bis 25₃ sowie zwischen dem Koppler 3 und dem Detektor 5 befinden sich mehr oder weniger lange Verbindungsstücke an optischer Faser, die aus den oben genannten Gründen zu verstauen sind und bisher in Schleifen verlegt und dann am Gehäuse, am Chassis oder dergleichen verklebt werden.

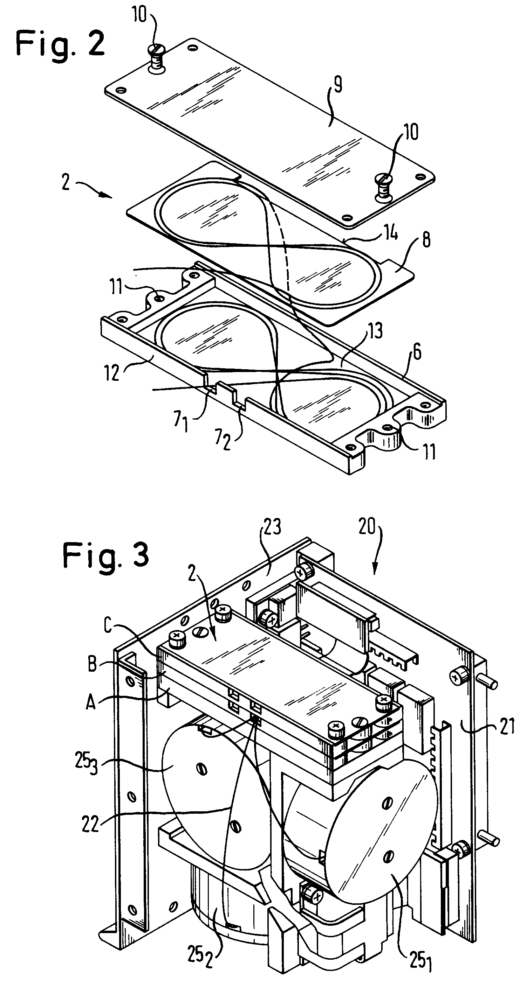

Erfindungsgemäß werden die Faserverbindungsstücke zwischen den genannten Komponenten in ein Aufnahmegehäuse (im folgenden auch kurz als ''Box'' bezeichnet) eingelegt, das im folgenden mit Bezug auf die Fig. 2 und 3 näher beschrieben wird.

Die Box 2 besteht im wesentlichen aus einer im dargestellten Beispiel rechteckförmigen Grundplatte 12 mit einem einstückig angesetzten flachen, umlaufenden Rand 6, wodurch ein Aufnahmeraum 13 für optische Faser gebildet ist. Eine dünne Trennplatte 8 mit im wesentlichen der Fläche des Aufnahmeraums 13 unterteilt den Aufnahmeraum 13 in eine untere und eine obere Sektion. Eine längserstreckte Aussparung 14 entlang einer Längskante der Trennplatte 8 dient zur Verbindung zwischen der unteren und oberen Sektion des Aufnahmeraums 13 und gleichzeitig zur geschützten Unterbringung eines zu schützenden Faserabschnitts, beispielsweise eines Spleißes oder Kopplers, wie oben erwähnt.

Die Box 2 wird durch eine obere Verschlußplatte 9 abgedeckt, die mittels Schrauben 10 und Gewinde 11 fixiert ist. Auf der der Aussparung 14 gegenüberliegenden längsseitigen Seitenwand 6 sind zwei seitliche Durchbrechungen 7₁, 7₂ vorhanden, über welche die zu verstauende Fasermenge eingeschoben wird, wobei sich unter Beachtung eines bestimmten Formfaktors die Faser beim Hineinschieben geordnet und ohne Verdrillungen plazieren läßt. Eine Kleberfixierung oder dergleichen entfällt und die Faser läßt sich einfach wieder herausziehen.

Für das einfache Verstauen eines beliebigen Faserendes könnte auf die Trennplatte 8 verzichtet werden. Die seitlichen Durchbrechungen 7₁, 7₂ können dann durch einen einzigen Längsschlitz ersetzt sein. Sofern jedoch, wie oben erwähnt, ein empfindlicher zu schützender Bereich, etwa ein Spleiß oder Koppler, vorhanden ist, wird dieser Bereich bei geöffneter Box 2 zunächst dort positioniert, wo sich die Aussparung 14 der Trennplatte 8 befindet. Anschließend wird bei geschlossener Box 2 z. B. die auf einer Seite des empfindlichen Bereichs befindliche Faser zuerst unterhalb der Trennplatte 8 durch die Durchbrechung 7₁ eingefädelt, anschließend wird der restliche andere Faserabschnitt oberhalb der Platte 8 durch die andere Durchbrechung 7₂ eingefädelt. Der zu schützende Bereich liegt dann störungsfrei in der Aussparung 14 der Trennplatte 8.

Die Fig. 3 zeigt den konstruktiven räumlichen Aufbau und die Anordnung einer dreiachsigen faseroptischen Drehratensensoranordnung 20 mit drei jeweils orthogonal zueinander ausgerichteten Sensoreinheiten 25₁, 25₂ und 25₃. Auf einer an einem Chassis 23 rückseitig fixierten Platine 21 sind die Lichtquellen- und Detektorelektronik angeordnet. Oberhalb der Sensoreinheiten 25 ist eine Stapelanordnung von drei erfindungsgemäßen Aufnahmegehäusen 2 angeordnet, die ebenfalls am Chassis 23 fixiert ist. Die Zuordnung der mit A, B und C gekennzeichneten Aufnahmegehäuse zu den einzelnen Faserabschnitten der schematisch in Fig. 1 dargestellten dreiachsigen Drehratensensoranordnung ist durch die Verwendung der entsprechenden Hinweiszeichen A bis C in Fig. 1 erkennbar.

## Patentansprüche

1. Aufnahmegehäuse (2) für optische Faser (22) in einer faseroptischen Meßeinrichtung (20) mit einer Grundplatte (12), umlaufenden Seitenwänden (6) zur Umgrenzung eines flachen Aufnahmeraums (13), mit wenigstens einer Durchbrechung (7) in einer der Seitenwände (6), über die die optische Faser in den Aufnahmeraum hineingeschoben bzw. herausgezogen wird, sowie mit einer oberen Verschlußplatte (9).

2. Aufnahmegehäuse nach Anspruch 1, **dadurch gekennzeichnet**, daß zwei auf geringen Abstand voneinander angeordnete Durchbrechungen (7) vorgesehen sind zur Durchführung jeweils eines Endes der im Aufnahmeraum enthaltenen Fasermenge.

3. Aufnahmegehäuse nach Anspruch 2, **dadurch gekennzeichnet**, daß der flache Aufnahmeraum (13) durch eine parallel zur Grundplatte (12) bzw. zur Verschlußplatte (9) angeordnete Trennplatte (8) in eine obere und eine untere Sektion zur Aufnahme von optischen Fasern unterteilt ist, und daß die Trennplatte (8) an einer Längsseite eine sich über einen wesentlichen Teil der Länge der Trennplatte (8) erstreckende Aussparung (14) geringer Tiefe aufweist.

4. Aufnahmegehäuse nach einem der vorstehenden Ansprüche, **dadurch gekennzeichnet**, daß der flache Aufnahmeraum (13) rechteckförmig ist mit einem Abmessungsverhältnis seiner Länge zu seiner Breite von etwa 2:1, wobei die Breite größer gewählt ist als der zulässige Biegeradius der in den Aufnahmeraum einzuschiebenden Faser.

5. Aufnahmegehäuse nach einem der vorstehenden Ansprüche, **dadurch gekennzeichnet**, daß die lichte Höhe des flachen Aufnahmeraums (13) so bemessen ist, daß mehrere Lagen der optischen Faser in loser Stapelung eingebracht werden können.

6. Aufnahmegehäuse nach einem der vorstehenden Ansprüche zur Verwendung in einer faseroptischen Drehratensensoreinheit (20) als Aufnahmebehälter für eine Lichtleitfaser, die eine Lichtquelle (1) mit einem optischen Koppler (3) und/oder den optischen Koppler (3) mit einer Sensoreinheit (25₁ bis 25₃) und/oder den optischen Koppler (3) mit einem Photodetektor (5) verbindet.
